# EUROPEAN PATENT SPECIFICATION

(11) **EP 0 940 269 B1**
(45) Date of publication and mention of the grant of the patent: **26.05.2004**
(21) Application number: 99301591.6
(22) Date of filing: 03.03.1999
(51) Int. Cl.: B60C 5/00, B60C 17/06, B60C 19/12

(54) **Tyre system for motorcycles**
Reifensystem für motoräder
Système de pneumatique pour motos

(30) Priority: 04.03.1998 JP 5240998
(43) Date of publication of application: 08.09.1999
(73) Proprietor: Sumitomo Rubber Industries Ltd., Kobe-shi, Hyogo-ken (JP)
(72) Inventor: Fujiwara, Kenichi, Miki-shi, Hyogo-ken (JP); Kuwahara, Takao, Kobe-shi, Hyogo-ken (JP)
(74) Representative: Manitz, Finsterwald & Partner

(56) References cited:
- EP-A- 0 441 552
- EP-A- 0 897 814
- PATENT ABSTRACTS OF JAPAN vol. 1998, no. 05, 30 April 1998 (1998-04-30) -& JP 10 006707 A (SUMITOMO RUBBER IND LTD), 13 January 1998 (1998-01-13)
- PATENT ABSTRACTS OF JAPAN vol. 1998, no. 09, 31 July 1998 (1998-07-31) -& JP 10 100608 A (SUMITOMO RUBBER IND LTD), 21 April 1998 (1998-04-21)
- PATENT ABSTRACTS OF JAPAN vol. 1996, no. 10, 31 October 1996 (1996-10-31) -& JP 08 164719 A (SUMITOMO RUBBER IND LTD), 25 June 1996 (1996-06-25)

## Description

The present invention relates to a tyre system for motorcycles comprising a pneumatic tyre, a tyre core disposed therein and a pressure bag disposed in the core.

In motorcycles arranged for running off-road, a pneumatic tyre is usually used together with a tyre tube because the tyre inflation pressure is relatively low. In this case, therefore, the tyre tube is liable to puncture when getting over edged objects such as rocks, stumps and the like and landing after a high jump for example.

In order to prevent such punctures of a tyre tube, laid-open Japanese patent application No. JP-A-3-231008 proposed to use a buffer made of sponge rubber disposed between the tyre and the tube. Such a buffer is effective for preventing punctures. However, the durability of the buffer is decreased by heat generation during running due to friction between the tyre and buffer. If the buffer is increased in volume to reduce the friction, it becomes too difficult to mount the tyre on the rim.

European Patent EP-A-0 897 814 published on 24.02.1999 and which has DE, FR and IT but not GB as designated contracting states, discloses a motorcycle tyre having a cavity containing an annular tyre core made of elastic closed cell material and provided inside with a groove containing a pressure bag. When the tyre core is not in the cavity this cross-sectional area is in the range of 3.1 to 4.8 times the cross-sectional area of the groove and the total of the cross-sectional area of the tyre core and of the groove is in the range of from 1.0 to 1.3 times the cross-sectional area of the cavity.

JP-A-10006707 discloses a motorcycle tyre containing a buffer of closed cell material having an expansion ratio of 400-1500% and an inflation tube in a hollow therein. Lubricant is used between the buffer and the tube. Such assemblies do not provide good durability in combination with ease of assembly of the components to a wheel rim which is the object of the present invention.

Accordingly the present invention comprises a tyre system as set out in either main claim of the two sets of claims attached.

An embodiment of the present invention will now be described in detail in conjunction with the accompanying drawings in which:-
Fig.1 is a perspective view of an assembly of a pneumatic tyre, tyre core, pressure bag and wheel rim showing an embodiment of the present invention;
Fig.2 is a cross sectional view of which right half shows the assembly in which the pressure bag is normally inflated, and left half shows the tyre core under the free state and the pressure bag being inflated to 10 % of the working pressure; and
Fig.3 is a diagram for explaining sectional areas of the tyre cavity, tyre core and groove.

According to the present invention, a tyre system 1 comprises a pneumatic tyre 2, an annular tyre core 6 inserted in the cavity of the tyre, and an annular pressure bag 5 disposed in a groove which is formed on the radially inside of the tyre core 6. The tyre 2, core 6 and pressure bag 5 are assembled beforehand. Then, the assembly is mounted on a wheel rim 3. In this system, the inside 4a of the tyre 2 is pressurised by the tyre core 6. The pressure bag 5 supports the inside of the tyre core 6 by its inflation.

The tyre 2 comprises a tread portion 8, a pair of sidewall portions 9, and a pair of bead portions 10. Usually, the tyre 2 is reinforced by a bead core disposed in each bead portion, and at least one carcass ply extending between the bead portions through the tread portion and sidewall portions, and a belt disposed radially outside the carcass in the tread portion.

In comparison with tyres in other fields such as passenger car tyres, truck/bus tyres and the like, the tread portion 8 is curved having a relatively small radius of curvature and the maximum tyre width lies between the tread edges.

In this embodiment, the tread portion 8 is provided with a plurality of blocks 8a to form a block pattern.

The wheel rim 3 comprises a pair of rim bead seats 3b on which the tyre bead portions 10 sit, a round well 3a therebetween, and a pair of rim flanges 3c each extending radially outwardly from the axially outer end of one of the rim seats 3b.

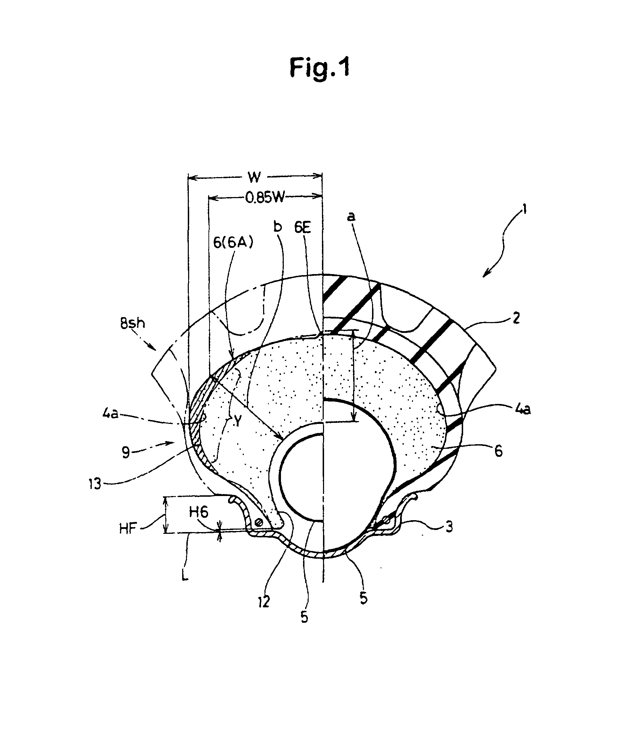

In this embodiment, as shown in Fig.1, the flanges 3a and rim seats 3b are each provided with a large number of small height projections 11 each extending in a direction at a right angle to the tyre circumferential direction. Therefor, the projections 11 effectively increase the circumferential friction between the tyre 2 and rim 3 under relatively low pressure conditions. Further, during mounting the tyre on the wheel rim, air between the bead portion 10 and rim flange 3c is released through the space formed around the projections 11, and air retention after the tyre is mounted on the wheel rim can be prevented.

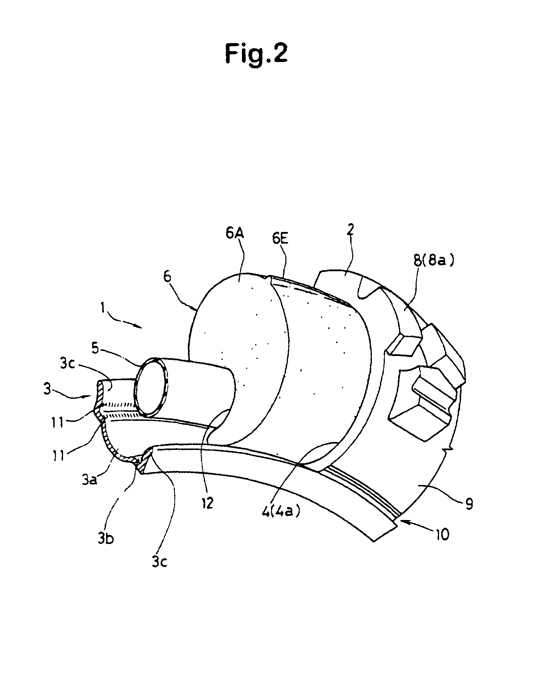

The pressure bag 5 is an annular endless tube made of an air-impermeable rubber compound including butyl-rubber as a major component. Preferably, under 10 % of working pressure, the pressure bag 6 has a substantially circular sectional shape as shown in Fig.1 and Fig.2, and the centre thereof is located at a position lower than 50 % of the tyre section height so that the tyre core 6 is pressed onto the inside 4a of the tyre when inflated to the working pressure. Here, the working pressure for the pressure bag 5 is for example in the range of from 70 to 150 kpa, usually in the range of from 80 to 120 kpa. The rubber thickness of the pressure bag 5 is preferably in the range of from 0.03 to 0.1 times the pressure bag diameter under 10 % of the working pressure. If less than 0.03 times the pressure bag diameter, it is difficult to obtain the necessary strength for the pressure bag. If more than 0.1 times the diameter, it becomes difficult to apply the necessary pressure to the inside of the tyre, and the tyre weight unfavourably increases.

The tyre core 6 is an annular body of an elastic closed-cell material which has a JIS-C hardness of from 10 to 35 degrees, more preferably 10 to 30 degrees, and a specific gravity of from 0.1 to 0.2. By specifically limiting the JIS-C hardness, namely a hardness of surface, the cornering grip and handling performance can be improved. In this example, a sponge rubber having an expansion rate of from 400 to 1500 %, preferably 400 to 1100 % is used. For the rubber material therefor, preferably, butyl rubber compounds such as butyl rubber, brominated butyl rubber, halogenated butyl rubber and the like are used. If the expansion rate is less than 400 %, the shock absorption by the tyre core 5 becomes insufficient and the pressure bag is liable to be punctured. Further, ride comfort is not good. If the expansion rate is more than 1500 %, load support by the tyre core 5 becomes impossible and stability during straight running and cornering is lost.

The outer profile of the tyre core 6 is deliberately altered from the inner profile of the tyre 2.

The inner profile 4a of the tyre is generally oval with its major axis extending in the axial direction.

Also, the outer profile of the tyre core 6 is generally oval the major axis of which extends in the axial direction, but both sides thereof are swelled as indicated in the left half of Fig.2 as a hatched crescent area 13.

The maximum thickness of this swelled portion 13 or the maximum difference between the two profiles occurs near but somewhat radially outside the maximum section width point of the tyre core. The difference or thickness gradually decreases towards the radially inside and outside, and the radially outer end reaches to the mid point of a half sectional width W between the tyre equatorial plane and the axially outmost point. The radially inner end reaches to about one third of the section height of the tyre core 6.

The tyre core 6 extends radially inwardly near to the bead bottom, and the radial height H6 of the radially inner end is not more than 25 % of the height Hf of the rim flange, each measured from the bead base line L.

The radially inside of the tyre core 6 is provided with a groove 12 for inserting the pressure bag 5 therein.

The groove 12 extends continuously in the circumferential direction, and the sectional shape thereof is an arc of more than 180 degrees preferably more than 210 degrees but less than 300 degrees (in this example, about 270 degrees).

The thickness (b) of the tyre core 6 measured at a point on the outside of the tyre core 6 at an axial distance of 0.85 times the half tyre width W from the tyre equatorial plane C is in the range of from 1.02 to 1.10 times the thickness (a) measured at the tyre equator C.

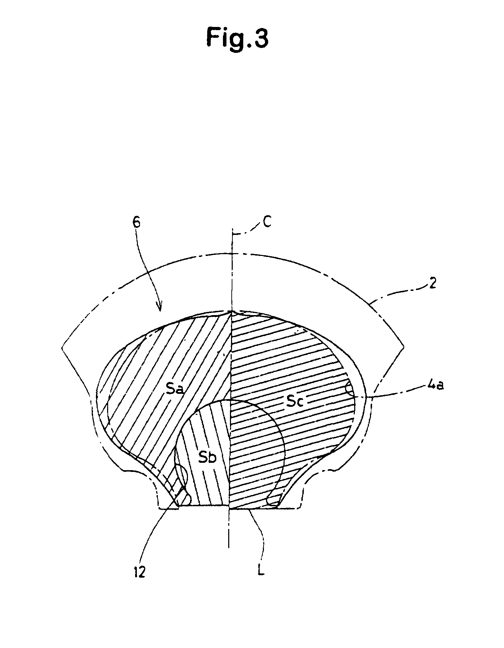

Further, as shown in Fig.3, in the free state when it is not inserted in the tyre cavity, the sectional area Sa of the tyre core 6 is set in the range of from 3.1 to 4.8 times the sectional area Sb of the groove 12.

Furthermore, the total Sa+Sb of the sectional areas Sa and Sb is in the range of from 1.0 to 1.3 times the sectional area Sc of the tyre cavity.

Here, the sectional area Sc is defined as of the tyre cavity being surround by the tyre inside 4a and the bead base line L when the tyre 2 is mounted on the rim 3 without the core 6 and inflated to its standard pressure specified by a Standardisation Organisation such as JATMA (Japan), TRA (USA), ETRTO (Europe) and the like.

Still furthermore, the sectional area Sa of the tyre core 6 is preferably set in the range of from 0.76 to 1.1 times the sectional area Sc of the tyre cavity.

Therefore, under service conditions, the tyre core 6 is more compressed in the swelled portions 13 than the other portions. As a result, a part Y inside the tyre sidewall 9 and shoulder 8sh is increased in rigidity. Accordingly, it is possible to effectively support the tyre load even if the bag 5 is punctured, and the cornering performance and running stability can be improved. Further, in the tread centre portion, as the compression is relatively low, the ride comfort, shock absorption and road grip can be effectively improved. Further, during mounting the tyre on the rim, as the tyre core is less compressed in the radial direction than the axial direction, the tyre core is prevented from being forced out from between the bead portions. As a result, the assembling work and mounting work are improved.

If Sa is less than 3.1 times Sb and/or Sa+Sb is less than 1.0 times Sc, the shock absorption, prevention of pressure bag's puncture and run-flat performance become poor. If Sa is more than 4.8 times Sb and/or Sa+Sb is more than 1.3 times Sc, the assembling becomes difficult, and further, the heat generation from the tyre core 6 increases.

In this embodiment, the tyre core 6 is further provided on the radially outside thereof with a peaked projection or joint 6E. The jut 6E extends along the tyre equator, and the height thereof is about 1 to 3 mm. Therefore, when the pressure bag 5 is inflated to the working pressure, the contact pressure between the jut 6E and the inside 4a of the tyre becomes relatively high, and the tyre core 6 can be prevented from being out of position, and relative movements can be effectively suppressed to lessen heat generation.

### Comparison tests

The following comparison tests were made using various tyre cores. The specifications and the test results are shown in Table 1.

### Assembling work test:

Using a tyre lever, a tyre in which a tyre core and pressure bag were pre-assembled was mounted on a wheel rim five times by hand. When the pressure bag was broken or the tyre could not be mounted on the rim one or more times, then it was judged to be "bad".

### Durability test:

An off-road motorcycle (two-cycle 250 cc engine) on which the test tyre system was applied to the rear wheel was continuously run on an off-road test course at an average speed of 30 km/h, and the running time until any failure occurred on the tyre core was measured. (standard = three hours)
Inner pressure: 80 kpa
Front tyre: 80/100-21
From the test results, it was confirmed that the tyre system according to the present invention was improved in durability while maintaining easy and safe assembling.

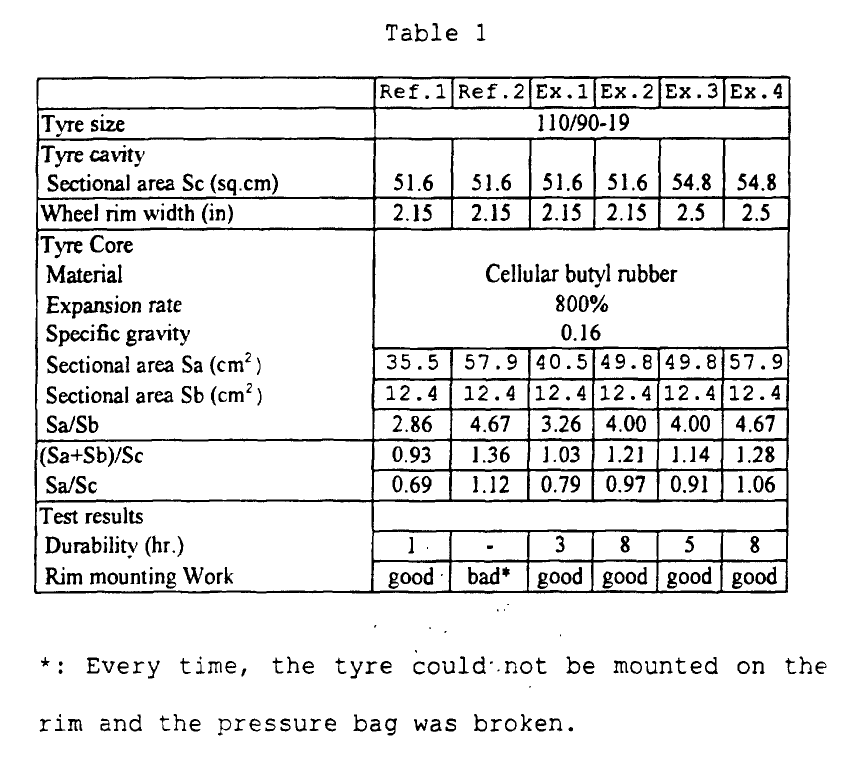

## Claims (Claims for the following Contracting State(s): GB)

1. A tyre system for motorcycles comprising a pneumatic tyre (2) having a cavity, an annular tyre core (6) made of an elastic closed-cell material disposed in the cavity and provided on the radially inside with a groove, a pressure bag (5) inserted in the groove, wherein in a free state of the tyre core when it is not disposed in the cavity, the cross sectional area (Sa) of the tyre core (6) is in the range of from 3.1 to 4.8 times the cross sectional area (Sb) of the groove, **characterised in that** the total (Sa+Sb) of the cross sectional area (Sa) of the tyre core (6) and the cross sectional area (Sb) of the groove is in the range of from 1.0 to 1.3 times the cross sectional area Sc of the cavity.

2. A tyre system according to claim 1, **characterised in that** the cross sectional area (Sa) of the tyre core (6) is in the range of from 0.76 to 1.1 times the cross sectional area (Sc) of the cavity.

3. A tyre system according to claim 1 or 2, **characterised in that** the cross sectional shape of the groove is an arc of more than 180 degrees but less than 300 degrees.

4. A tyre system according to any of claims 1 to 3, **characterised in that** the tyre core (6) is provided on the radially outside thereof with a peaked jut (6E) having a radial height of from 1 to 3 mm, and extending along the tyre equator.

5. A tyre system according to any of claims 1 to 4, **characterised in that** the tyre core (6) extends radially inwardly to substantially the bottom of the bead portions.

## Claims (Claims for the following Contracting State(s): DE, FR, IT)

1. A tyre system for motorcycles comprising a pneumatic tyre (2) having a cavity, an annular tyre core (6) made of an elastic closed-cell material disposed in the cavity and provided on the radially inside with a groove and a pressure bag (5) inserted in the groove, wherein in a free state of the tyre core when it is not disposed in the cavity, the cross sectional area (Sa) of the tyre core (6) is in the range of from 3.1 to 4.8 times the cross sectional area (Sb) of the groove, the total (Sa+Sb) of the cross sectional area (Sa) of the tyre core (6) and the cross sectional area (Sb) of the groove is in the range of from 1.0 to 1.3 times the cross sectional area (Sc) of the cavity and the tyre core (6) is provided on the radially outside thereof with a peaked jut (6E) having a radial height of from 1 to 3 mm, and extending along the tyre equator.

2. A tyre system according to claim 1, **characterised in that** the cross sectional area (Sa) of the tyre core (6) is in the range of from 0.76 to 1.1 times the cross sectional area (Sc) of the cavity.

3. A tyre system according to claim 1 or 2, **characterised in that** the cross sectional shape of the groove is an arc of more than 180 degrees but less than 300 degrees.

4. A tyre system according to any of claims 1 to 3, **characterised in that** the tyre core (6) extends radially inwardly to substantially the bottom of the bead portions.

## Patentansprüche (Patentansprüche für folgende(n) Vertragsstaat(en): GB)

1. Reifensystem für Motorradreifen, umfassend einen Luftreifen (2) mit einem Hohlraum, einem kreisringförmigen Reifenkern (6), der aus einem elastischen, geschlossenzelligen Material hergestellt ist, das in dem Hohlraum angeordnet ist und an der radialen Innenseite mit einer Nut versehen ist, und eine Drucktasche (5), die in die Nut eingesetzt ist, wobei in einem freien Zustand des Reifenkerns, wenn er nicht im Hohlraum angeordnet ist, die Querschnittsfläche (Sa) des Reifenkerns (6) im Bereich des 3,1 bis 4,8-fachen der Querschnittsfläche (Sb) der Nut liegt, **dadurch gekennzeichnet, dass** die Summe (Sa+Sb) der Querschnittsfläche (Sa) des Reifenkerns (6) und der Querschnittsfläche (Sb) der Nut im Bereich des 1,0 bis 1,3-fachen der Querschnittsfläche (Sc) des Hohlraums liegt.

2. Reifensystem nach Anspruch 1, **dadurch gekennzeichnet, dass** die Querschnittsfläche (Sa) des Reifenkerns (6) im Bereich des 0,76 bis 1,1-fachen der Querschnittsfläche (Sc) des Hohlraums liegt..

3. Reifensystem nach Anspruch 1 oder 2, **dadurch gekennzeichnet, dass** die Querschnittsform der Nut ein Bogen von mehr als 180 Grad aber weniger als 300 Grad ist.

4. Reifensystem nach einem der Ansprüche 1 bis 3, **dadurch gekennzeichnet, dass** der Reifenkern (6) an seiner radialen Außenseite mit einem spitz zulaufenden Vorsprung (6E) versehen ist, der eine radiale Höhe von 1 bis 3 mm aufweist und sich entlang des Reifenäquators erstreckt.

5. Reifensystem nach einem der Ansprüche 1 bis 4, **dadurch gekennzeichnet, dass** der Reifenkern (6) sich radial nach innen bis im Wesentlichen zur Unterseite der Wulstabschnitte erstreckt.

## Patentansprüche (Patentansprüche für folgende(n) Vertragsstaat(en): DE, FR, IT)

1. Reifensystem für Motorradreifen, umfassend einen Luftreifen (2) mit einem Hohlraum, einem kreisringförmigen Reifenkern (6), der aus einem elastischen, geschlossenzelligen Material hergestellt ist, das in dem Hohlraum angeordnet ist und an der radialen Innenseite mit einer Nut versehen ist, und eine Drucktasche (5), die in die Nut eingesetzt ist, wobei in einem freien Zustand des Reifenkerns, wenn er nicht im Hohlraum angeordnet ist, die Querschnittsfläche (Sa) des Reifenkerns (6) im Bereich des 3,1 bis 4,8-fachen der Querschnittsfläche (Sb) der Nut liegt, die Summe (Sa+Sb) der Querschnittsfläche (Sa) des Reifenkerns (6) und der Querschnittsfläche (Sb) der Nut im Bereich des 1,0 bis 1,3-fachen der Querschnittsfläche (Sc) des Hohlraums liegt, und der Reifenkern (6) an seiner radialen Außenseite mit einem spitz zulaufenden Vorsprung (6E) versehen ist, der eine radiale Höhe von 1 bis 3 mm aufweist und sich entlang des Reifenäquators erstreckt.

2. Reifensystem nach Anspruch 1, **dadurch gekennzeichnet, dass** die Querschnittsfläche (Sa) des Reifenkerns (6) im Bereich des 0,76 bis 1,1-fachen der Querschnittsfläche (Sc) des Hohlraums liegt.

3. Reifensystem nach Anspruch 1 oder 2, **dadurch gekennzeichnet, dass** die Querschnittsform der Nut ein Bogen von mehr als 180 Grad aber weniger als 300 Grad ist.

4. Reifensystem nach einem der Ansprüche 1 bis 3, **dadurch gekennzeichnet, dass** der Reifenkern (6) sich radial nach innen bis im Wesentlichen zur Unterseite der Wulstabschnitte erstreckt.

## Revendications (Revendications pour l'(les) Etat(s) contractant(s) suivant(s): GB)

1. Système de pneumatique destiné à des motocyclettes, comprenant un pneumatique (2) comportant une cavité, un pneu central annulaire (6) fait de matériau cellulaire élastique disposé dans la cavité et pourvu sur l'intérieur, de manière radiale, d'une rainure, d'une poche sous pression (5) insérée dans la rainure, dans lequel, dans un état libre du pneu central lorsqu'il n'est pas disposé dans la cavité, la section (Sa) du pneu central (6) varie de 3,1 à 4 fois la section (Sb) de la rainure, **caractérisé en ce que** le total (Sa + Sb) de la section (Sa) du pneu central (6) et la section (Sb) de la rainure varie de 1,0 à 1,3 fois la section Sc de la cavité.

2. Système de pneumatique selon la revendication 1, **caractérisé en ce que** la section (Sa) du pneu central (6) varie de 0,76 à 1,1 fois la section Sc de la cavité.

3. Système de pneumatique selon la revendication 1 ou 2, **caractérisé en ce que** la forme de la section de la rainure est un arc de plus de 180 degrés, mais de moins de 300 degrés.

4. Système de pneumatique selon l'une quelconque des revendications 1 à 3, **caractérisé en ce que** le pneu central (6) est pourvu à l'extérieur de celui-ci, de manière radiale, d'une saillie en pointe (6E) présentant une hauteur radiale de 1 à 3 mm, et s'étendant le long de l'équateur du pneumatique.

5. Système de pneumatique selon l'une quelconque des revendications 1 à 4, **caractérisé en ce que** le pneu central (6) s'étend radialement et vers l'intérieur, vers sensiblement le fond des parties du talon.

## Revendications (Revendications pour l'(les) Etat(s) contractant(s) suivant(s): DE, FR, IT)

1. Système de pneumatique destiné à des motocyclettes, comprenant un pneumatique (2) comportant une cavité, un pneu central annulaire (6) fait de matériau cellulaire élastique disposé dans la cavité et pourvu sur l'intérieur, de manière radiale, d'une rainure et d'une poche sous pression (5) insérée dans la rainure, dans lequel, dans un état libre du pneu central lorsqu'il n'est pas disposé dans la cavité, la section (Sa) du pneu central (6) varie de 3,1 à 4,8 fois la section (Sb) de la rainure, le total (Sa + Sb) de la section (Sa) du pneu central (6) et la section (Sb) de la rainure varie de 1,0 à 1,3 fois la section Sc de la cavité, et le pneu central (6) est pourvu à l'extérieur de celui-ci, de manière radiale, d'une saillie en pointe (6E) présentant une hauteur radiale de 1 à 3 mm, et s'étendant le long de l'équateur du pneumatique.

2. Système de pneumatique selon la revendication 1, **caractérisé en ce que** la section (Sa) du pneu central (6) varie de 0,76 à 1,1 fois la section Sc de la cavité.

3. Système de pneumatique selon la revendication 1 ou 2, **caractérisé en ce que** la forme de la section de la rainure est un arc de plus de 180 degrés, mais de moins de 300 degrés.

4. Système de pneumatique selon l'une quelconque des revendications 1 à 3, **caractérisé en ce que** le pneu central (6) s'étend radialement et vers l'intérieur, vers sensiblement le fond des parties du talon.
